# EUROPÄISCHE PATENTSCHRIFT

(11) **EP 0 557 597 B1**
(45) Veröffentlichungstag und Bekanntmachung des Hinweises auf die Patenterteilung: **03.11.1999**
(21) Anmeldenummer: 92120569.6
(22) Anmeldetag: 02.12.1992
(51) Int. Cl.: B32B 3/28, E04B 1/88

(54) **Thermisches und akustisches Isolierlaminat**
Thermal and acoustic insulating laminate
Laminé pour l'isolation acoustique et thermique

(30) Priorität: 18.12.1991 DE 4141855
(43) Veröffentlichungstag der Anmeldung: 01.09.1993
(73) Patentinhaber: Rex Industrie Produkte Graf von Rex GmbH, 74523 Schwäbisch Hall (DE)
(72) Erfinder: Vollweiter, Heinrich, W-7175 Vellberg (DE)
(74) Vertreter: TER MEER STEINMEISTER & PARTNER GbR

(56) Entgegenhaltungen:
- EP-A- 0 069 401
- DE-U- 8 714 436
- FR-A- 2 396 868
- US-A- 4 386 128
- US-A- 4 461 796
- US-A- 4 495 237
- US-A- 4 837 388

## Beschreibung

Die Erfindung betrifft ein thermisches und akustisches Isolierlaminat mit mindestens zwei schichtbildenden Elementen.

Isoliermaterialien für thermische und akustische Zwecke werden seit vielen Jahren in großem Umfang verwendet. Häufig finden hierbei organische und anorganische Materialien, Fasern, Matten, Geflechte. Granulate und dergleichen Verwendung. Mit den erhöhten Bestrebungen, den Energieverbrauch zu reduzieren und Lärmquellen einzudämmen, sind auch die Forderungen an die Isoliermaterialien gestiegen. Insbesondere wird erwartet, daß die Isoliermaterialien inert, Umweltnunbedenklich und auch recyclebar sind. Gleichzeitig sind aber die Erwartungen an die Isolierfähigkeit, Standzeit, Nichtbrennbarkeit und kostengünstige Herstellung zunehmend gestiegen.

Die US-A-4,461,796 beschreibt Schalldämmaterialien in Form eines Verbundkörpers mit einem bienenwabenartigen oder gewellten Kern, der beispielsweise aus Aluminium bestehen kann, und einer Deckbahn aus Papier, Asbestpapier, Gummi, Kunststoff oder auch Aluminiumblech.

Gegenstand des deutschen Gebrauchsmusters 87 14 436.0 ist eine Füllplatte aus schalldämpfenden und wärmedämmendem Verbundmaterial aus wechselweise aufeinanderfolgenden planen und gefalteten Folien, die miteinander verklebt sind. Die Folien können aus Kunststoff oder Leichtmetall, vorzugsweise einer Aluminiumlegierung bestehen, wobei wenigstens eine der Folien aus Kunststoff und wenigstens eine der Folien aus einer Aluminiumlegierung besteht.

Die US-A-4,386,128 beschreibt ein wärmeisolierendes Laminat aus einer schrumpfbaren dünnen Kunsstoffolie, zwei Aluminiumfolien und einer nichtschrumpfbaren Kunsstoffolie, welche Folien punktförmig miteinander verbunden sind, wobei sich durch das Schrumpfen der Kunststoffolien ein voluminöses Laminat ergibt. Es ist angegeben, daß die Aluminiumfolie eine Dicke von 7 µm besitzen kann, welche allerdings mit einer Polyvinylchloridfolie mit einer Dicke von 17 µm verbunden ist.

Gegenstand der FR-A-2 396 868 ist eine schalldämmende Garnitur zur Umhüllung von Leitungen, die durch einen Gasstrom durchströmt werden. Diese Garnitur umfaßt ein innenliegendes mit Perforationen versehenes Metallblech mit einer außenliegenden Dämmaterialschicht aus einem weichem und porösen Material, beispielsweise einem Filz aus hitzefesten Fasern oder einem Schaum aus einer hitzebeständigen Legierung. Zwischen diesen beiden Außenlagen sind Abstandshalter in Form von wabenförmigen, trägerförmigen oder gewellten metallischen Einrichtungen vorgesehen.

Die EP-A-0 069 491 beschreibt ein Verfahren und eine Vorrichtung zur Herstellung eines flächigen Verbundmaterials mit mindestens einer profilierten Materialbahn und mindestens einer planen Materialbahn, welche im Bereich ihrer einander berührenden Flächenabschnitte miteinander verbunden sind, wobei mindestens eine der Materialbahnen aus Metall besteht.

Die nahezu zahllosen Vorschläge, die zur Schaffung von Isoliermaterialien bekannt geworden sind, zeigen, daß immer wieder mangelnde Eigenschaften in der ein oder anderen Richtung in Kauf genommen werden mußten, d.h. Verbesserungen in der einen Richtung durch Nachteile in einer anderen Richtung.

Aufgabe der vorliegenden Erfindung ist es, ein Isoliermaterial zur Verfügung zu stellen, das die Nachteile der bekannten Materialien überwindet und namentlich auch die eingangs gestellten Forderungen befriedigt.

Die Lösung der gestellten Aufgabe gelingt erfindungsgemäß bei einem thermischen und akustischen Isolierlaminat mit mindestens zwei schichtbildenden Elementen, dadurch, daß als schichtbildende Elemente ausschließlich Aluminiumfolien enthalten sind, daß mindestens eine der Folien eine Dicke von ≤ 20 µm aufweist, daß zwischen den schichtbildenden Elementen Abstandselemente angeordnet sind, diese Abstandselemente wiederum nur aus Aluminium bestehen und die Berührungsfläche einer jeden Aluminiumfolie mit dem benachbarten Abstandselement 20 % oder kleiner, bezogen auf die Fläche der Aluminiumfolie, ist.

Als schichtbildende Aluminiumfolien können übliche bzw. in üblicher Weise hergestellte Aluminiumfolien verwendet werden. Es handelt sich meist um Folien aus unlegierten oder schwachlegiertem Aluminium. Verwendbar sind beispielsweise Aluminiumfolien mit Aluminiumgehalten von mehr als 99 Gew.-%. Mindestens zwei Aluminiumfolien sind im wesentlichen auf parallelen Ebenen, z.B. im Abstand von 2-10, vorzugsweise 3-8 mm angeordnet. Folienpakete mit 3 oder mehr schichtbildenden Aluminiumfolien sind möglich. Mindestens eine der schichtbildenden Aluminiumfolien hat eine Dicke von ≤ 20 µm, wobei die Untergrenze aus verarbeitungstechnischen Gründen nicht < 10 µm sein sollte. Folien im Bereich von 15 - 20 µm haben sich besonders bewährt. Die Berührungsfläche der ebenfalls aus Aluminium bestehenden Abstandselemente mit der benachbarten Aluminiumfolie ist, bezogen aufdie Folienfläche, 20%, vorzugsweise kleiner. Besonders bewährt haben sich Berührungsflächen im Bereich von unter 15 %, vorzugsweise zwischen 4 und 10 %. Als schichtbildende Aluminiumfolie kann, abgesehen von einer ≤ 20 µm-Folie, eine Aluminiumfolie entsprechend den technischen, namentlich mechanischen Erfordernissen verwendet werden. So können stärkere Aluminium-Trägerfolien verwendet werden. Es hat sich jedoch die Verwendung von Folien mit einer Dicke von 30 - 60 µm, insbesondere 35 - 50 µm besonders bewährt, wenn auch wesentlich stärkere schichtbildende Folien, z.B. von bis 100 µm oder bis 500 µm nicht ausgeschlossen sind.

Als Abstandselemente können Aluminiumfolien verwendet werden, die unter Bildung von ihre Folienfläche überragenden Erhebungen, Vorsprüngen und dergleichen verformt sind. Diese Folien können z.B. pyramiden-, leisten-, buckel- und kalotten-artige Verformungen aufweisen. Die Folien sind vorzugsweise von solcher Dicke und von einer solchen Verformung, daß sie eine ausreichende Steifigkeit im Sinne der Bewahrung der Abstandsfunktion und der vorgesehenen Einsatzbedingungen aufweisen. Besonders bewährt haben sich Abstandselemente, die als V-förmig profilierte Aluminiumfolie ausgebildet sind. Die Höhe der V-artigen Verformung dieser faltenbalgähnlich ausgebildeten Aluminiumfolie beträgt meist zwischen 2 und 6 mm, in Abhängigkeit von der jeweils erwarteten oder vorgegebenen Gesamtdicke des Isolierlaminats. Der Spitzenwinkel des V-förmigen Profils beträgt vorzugsweise zwischen 60 und 95°. Mit besonderem Vorteil werden V-förmig profilierte Aluminiumfolien, die scharfkantig sind, erwendet. Weiter hat es sich bewahrt, wenn die von dem V-förmigen Profil gebildeten Längskanten vor allem im Bereich der Spitzen-durch Einprägungen unterbrochen sind. Eine solche Ausgestaltung hat den besonderen Vorteil, daß das Laminat auch mit verhältnismäßig kleinen Radien gebogen werden kann, ohne daß die Laminatdicke wesentlich beeinträchtigt wird, wobei die Aufrechterhaltung ausreichender Abstände innerhalb des Laminats auch in den Krümmungsbereichen aus thermischen und akustischen Gründen von Vorteil ist.

Besonders bewährt haben sich Isolierlaminate der erfindungsgemäßen Art, bei denen zwei faltenbalgähnliche V-förmig profilierte Aluminiumfolien vorgesehen sind, die im Winkel zueinander, bezogen auf den Profilverlauf, angeordnet sind. Namentlich bei sich 90° annähernden Winkeln ist hierdurch, insbesondere im Zusammenwirken mit einem scharfkantigen Profil, eine praktisch nur punktförmige Berührung zwischen den beiden Abstandselementen möglich. Die Verwendung V-förmig profilierter Aluminiumfolien erlaubt gegenüber Folien,wie den schichtbildenden Elementen, eine Berührungszone von weniger als 10 %, bezogen auf die Gesamtfläche der schichtbildenden Folie, während die Gesamt-Berührungsfläche zwischen zwei V-förmig profilierten, gekreuzt angeordneten Abstands-Aluminiumfolien noch deutlich geringer ist. Die als Abstandselemente versehenen Aluminiumfolien sind in ihrer Dicke entsprechend der erwarteten Belastung ausgelegt. Besonders bewährt haben sich Aluminiumfolien mit einer Dicke von 30 - 60 µm, insbesondere 35 - 50 µm.

In weiterer Ausgestaltung der Erfindung sind in den zwischen oder von den schichtbildenden Folien oder Abstandselementen gebildeten Hohlräumen weitere z.B. an sich bekannte Isoliermaterialien bzw. schallbrechende Materialien angeordnet.

Sowohl unter akustischen wie auch thermischen Gesichtspunkten hat sich weiter die Anordnung einer Aluminiumfolienmembran ≤ 20 µm namentlich zwischen zwei Abstandselementen bewährt. Dies gilt für alle Arten der Abstandselemente. Besonders günstige Ergebnisse werden dann erzielt, wenn eine derartige Aluminiumfolienmembran zwischen zwei faltenbalgähnlichen V-förmig profilierten Abstandselementen aus Aluminiumfolie eingebracht ist.

Eine oder mehrere der vorhandenen Aluminiumfolien, einschließlich der schichtbildenden Aluminiumfolien, vorzugsweise aber die als Abstandselemente ausgebildeten Folien können gelocht sein. So haben sich perforierte Abstandselemente z.B. zur akustischen Isolierung als sehr wirksam erwiesen.

Die einzelnen Teile des Isolierlaminats können in üblicher Weise fixiert werden. Dies kann beispielsweise durch Nadeln oder Steppen z. B. mit Aluminiumdraht erfolgen.

Die Isolierlaminate der Erfindung können für unterschiedlichste Zwecke, z.B. im Bauwesen, im Schiffsbau, insbesondere aber im Fluggerätebau und Fahrzeugbau eingesetzt werden. Vor allem im Fahrzeugbau, zur Isolierung des Motorraums, der Fahrzeugzelle, insbesondere im Unterbodenbereich, aber auch im Seitenbereich der Abgasleitungen, der Katalysatoren sind die Isolierlaminate dank des geringen Gewichts und des Umstands, daß sie nur bzw. im wesentlichen nur aus Aluminium bestehen mit besonderem Vorteil verwendbar.

In der
einzigen **Zeichnung** ist teilgeschnitten in beispielhafter Form eine Ausführungsform des Isolierlaminats der Erfindung dargestellt.

Sie umfaßt zwei schichtbildende Aluminiumfolien 1 und 2, wobei die Aluminiumfolie 2 eine Dicke von knapp 20 µm aufweist. und gekreuzt angeordnete V-förmige Abstandselemente 3 und 4 und mit einer gegebenenfalls vorhandenen 20 µm Aluminiumfolie 5 als Zwischenschicht. Gegebenenfalls vorhandene Perforationen 6 und Einprägungen 7 sind beispielhaft dargestellt.

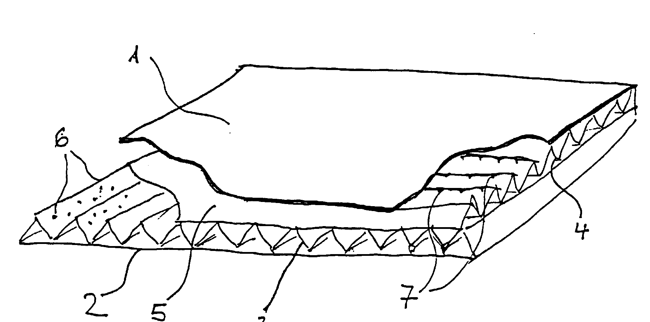

## Patentansprüche

1. Thermisches und akustisches Isolierlaminat mit mindestens zwei schichtbildenden Elementen, **dadurch gekennzeichnet**, daß als Schichtbildende Elemente ausschließlich Aluminiumfolien (1;2) angeordnet sind, daß mindestens eine dieser Folien(2) eine Dicke von ≤ 20 µm aufweist, daß Abstandselemente (3;4) ausschließlich aus Aluminium zwischen den schichtbildenden Elementen( 1;2) vorgesehen sind und die Berührungsfläche einer Aluminiumfolie (1;2) mit dem benachbarten Abstandselement (3;4) , bezogen auf die Gesamtfläche der Aluminiumfolie (1;2), 20 % oder kleiner ist.

2. Isolierlaminat gemäß Patentanspruch 1, **dadurch gekennzeichnet**, daß als Abstandselement (3;4) eine ihre Fläche überragende Erhebungen aufweisende Aluminiumfolie enthalten ist.

3. Isolierlaminat gemäß einem der vorhergehenden Patentansprüche, **dadurch gekennzeichnet**, daß als Abstandselement (3;4) eine V-förmig profilierte Aluminiumfolie enthalten ist.

4. Isolierlaminat nach Patentanspruch 3, **dadurch gekennzeichnet**, daß die von dem V-förmigen Profil gebildeten Kanten durch Einprägungen (7) unterbrochen sind.

5. Isolierlaminat gemäß einem der vorhergehenden Patentansprüche, **dadurch gekennzeichnet**, daß zwei oder mehr die Fläche überragende Erhebungen aufweisende Aluminiumfolien (3;4) enthalten sind.

6. Isolierlaminat gemäß einem der vorhergehenden Patentansprüche, **dadurch gekennzeichnet**, daß zwei V-förmig profilierte Aluminiumfolien (3;4) übereinander im Winkel, bezogen auf den Profilverlauf, angeordnet sind.

7. Isolierlaminat gemäß einem der vorhergehenden Patentansprüche, **dadurch gekennzeichnet**, daß die Dicke der als Abstandselemente (3;4) enthaltenen Aluminiumfolien 30 - 60, vorzugsweise 35 - 50 µm beträgt.

8. Isolierlaminat gemäß einem der vorhergehenden Patentansprüche. **dadurch gekennzeichnet**, daß zwischen zwei Abstandselementen eine Aluminiumfolie (5) einer Dicke von ≤ 20 µm angeordnet ist.

9. Isolierlaminat gemfäß einem der vorhergehenden Patentansprüche, **dadurch gekennzeichnet**, daß eine oder mehrere der Aluminiumfolien Lochungen (6) aufweisen.

10. Isolierlaminat gemäß einem der vorhergehenden Patentansprüche, **dadurch gekennzeichnet**, daß eine oder mehrere der schichtbildenden Aluminiumfolien (1;2) Erhebungen und/oder Einbuchtungen aufweisen.

## Claims

1. Thermal and acoustic insulating laminate with at least two layer-forming elements, characterised in that exclusively aluminium foils (1; 2) are arranged as the layer-forming elements, in that at least one of these foils (2) has a thickness of 20 µm, in that spacer elements (3; 4) made exclusively of aluminium are provided between the layer-forming elements (1; 2) and the contact surface of an aluminium foil (1; 2) with the adjacent spacer element (3; 4), referred to the total surface area of the aluminium foil (1; 2) is 20% or less.

2. Insulating laminate according to patent clam 1, characterised in that an aluminium foil having projections rising above its surface is contained as the spacer element (3; 4).

3. Insulating laminate according to any of the preceding clams, characterised in that an aluminium foil of V-shaped profile is contained as the spacer element (3;4).

4. Insulating laminate according to patent clam 3, characterised in that the edges formed by the V-shaped profile are interrupted by indentations (7).

5. Insulating laminate according to any of the preceding claims, characterised in that two or more aluminium foils (3; 4) comprising projections rising above the surface are contained.

6. Insulating laminate according to any of the preceding claims, characterised in that two aluminium foils (3; 4) of Y-shaped profile are arranged one above the other at an angle, referred to the path of the profile.

7. Insulating laminate according to any of the preceding claims, characterised in that the thickness of the aluminium films contained as spacer elements (3; 4) is 30 µm to 60 µm, preferably 35 µm to 50µm.

8. Insulating laminate according to any of the preceding claims, characterised in that between two spacer elements is arranged an aluminium foil (5) with a thickness of 20 µm.

9. Insulating laminate according to any of the preceding claims, characterised in that one or more of the aluminium foils have perforations (6).

10. Insulating laminate according to any of the preceding claims, characterised in that one or more of the lower-forming aluminium foils (1; 2) have projections and/or indentations.

## Revendications

1. Stratifié isolant thermique et acoustique comprenant au moins deux éléments formant couche, caractérisé en ce que comme éléments formant couche, il comprend exclusivement des feuilles d'aluminium (1 ; 2) en ce qu'au moins une de ces feuilles (2) présente une épaisseur de ≤ 20 µm, en ce que des éléments d'écartement (3, 4) exclusivement an aluminium sont disposés entre les éléments formant couche (1 ; 2), et la surface de contact d'une feuille d'aluminium (1 ; 2) avec l'élément d'écartement voisin (3 ; 4) est de 20 % ou moins de la surface totale de la feuille d'aluminium (1 ; 2).

2. Stratifié isolant selon la revendication 1, caractérisé en ce que comme éléments d'écartement (3 ; 4) il contient une feuille d'aluminium présentant des protubérances en saillie sur sa surface.

3. Stratifié isolant selon une des revendications précédentes, caractérisé en ce qu'il comprend comme élément d'écartement (3 ; 4), une feuille d'aluminium profilée en forme de V.

4. Stratifié isolant selon la revendication 3, caractérisé en ce que les arêtes formées par le profil en forme de V sont interrompues par des empreintes (7).

5. Stratifié isolant selon une des revendications précédentes, caractérisé en ce qu'il comprend deux ou plus de deux feuilles d'aluminium (3 ; 4) présentant des protubérances en saillie sur leur surface.

6. Stratifié isolant selon une des revendications précédentes, caractérisé en ce que deux feuilles en aluminium profilées en V (3 ; 4) sont disposées l'une sur l'autre, en formant un angle, rapporté au tracé des profils.

7. Stratifié isolant selon une des revendications précédentes, caractérisé en ce que l'épaisseur des feuilles d'aluminium contenues en tant qu'éléments d'écartement (3 ; 4) est de 30 à 60, de préférence 35 à 50 µm.

8. Stratifié isolant selon une des revendications précédentes, caractérisé en ce qu'une feuille d'aluminium (5) d'une épaisseur de ≤ 20 µm est disposée entre deux éléments d'écartement.

9. Stratifié isolant selon une des revendications précédentes, caractérisé en ce qu'une ou plusieurs des feuilles d'aluminium présente(nt) des perforations (6).

10. Stratifié isolant selon une des revendications précédentes, caractérisé en ce qu'une ou plusieurs des feuille d'aluminium (1 ; 2) formant couche présente(nt) des protubérances et/ou des dépressions.
